(19)

Europäisches
Patentamt
European
Patent Office
Office européen
des brevets

(11) **EP 3 404 523 A1**

(12) **EUROPEAN PATENT APPLICATION**

(43) Date of publication:
**21.11.2018 Bulletin 2018/47**

(51) Int Cl.:
**G06F 3/0481** (2013.01) **G06F 3/0484** (2013.01)

(21) Application number: **18172020.2**

(22) Date of filing: **14.05.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.05.2017 JP 2017097642**

(71) Applicant: **FUJITSU LIMITED
Kanagawa 211-8588 (JP)**

(72) Inventors:
• **HAKODA, Arika
Kawasaki-shi, Kanagawa 211-8588 (JP)**
• **HATADA, Koki
Kawasaki-shi, Kanagawa 211-8588 (JP)**
• **YURA, Junichi
Kawasaki-shi, Kanagawa 211-8588 (JP)**

(74) Representative: **Haseltine Lake LLP
Lincoln House, 5th Floor
300 High Holborn
London WC1V 7JH (GB)**

(54) **APPARATUS, SYSTEM, AND METHOD FOR INFORMATION PROCESSING**

(57)    An apparatus for information processing executes: detection processing that includes detecting a first operation target specified by a given operation with respect to a plurality of operation targets arranged on a display screen; selection processing that includes selecting a second operation target from among the plurality of operation targets in accordance with relationships with respect to the first operation target detected by the detection processing, the second operation target being different from the first operation target; and control processing that includes outputting the first operation target detected by the detection processing and the second operation target selected by the selection processing to the display screen in an arrayed manner.

FIG. 1

EP 3 404 523 A1

**Description**

FIELD

The embodiments discussed herein are related to an apparatus, a system, and a method for information processing.

BACKGROUND

An object operation system is known in which objects are displayed on a screen, a touch operation performed on the screen is received, and information is output in accordance with the touch operation. A control unit of the object operation system identifies a multi-touch operation in which a plurality of points of three or more are simultaneously touched on the screen based on information output from an operation unit. Then, in the case where a multi-touch operation has been performed, the control unit of the object operation system determines an operation target in accordance with whether a prescribed number of touches on two or more points are located on one object or are located in the region of an object group in which a plurality of objects are grouped together. Then, in the case where the position of at least one touch among a prescribed number of touches changes, the control unit of the object operation system executes an operation on the operation target in accordance with the change in the position of the touch.

Furthermore, an object display apparatus is known in which an operating mode is set to a group mode or an individual mode in accordance with whether group work is performed by a plurality of operators or individual work is performed by individual operators. In the case of the individual mode, the object display apparatus allocates objects displayed on the screen to the individual operators. In addition, in the case of the individual mode, the object display apparatus determines whether operations performed by a prescribed operator will affect the display state of other objects allocated to another operator, and in the case where the object display apparatus determines that the display state of the other objects will be affected, the operations that may be performed by the prescribed operator are restricted.

Examples of the related art include Japanese Laid-open Patent Publication No. 2016-115231 and Japanese Laid-open Patent Publication No. 2014-178933.

SUMMARY

TECHNICAL PROBLEM

In the related art, a user of the object operation system may be plagued with finding out and select a specific operation target from among vast amount of operation targets arranged on a display screen such as a touch panel. For example, the user may be unable to select the specific operation target in the case where the specific operation target is hidden due to a plurality of operation targets overlapping one another or in the case where the specific operation target is arranged at a position that is inconvenient for the user.

According to an aspect of embodiments discussed herein, provided are technologies for enabling an operation target that is related to a specific operation target to be easily selected.

SOLUTION TO PROBLEM

According to an aspect of the invention, an apparatus includes According to an aspect of the invention, an apparatus for information processing includes: a memory; a processor coupled to the memory and configured to: execute detection processing that includes detecting a first operation target specified by a given operation with respect to a plurality of operation targets arranged on a display screen; execute selection processing that includes selecting a second operation target from among the plurality of operation targets in accordance with relationships with respect to the first operation target detected by the detection processing, the second operation target being different from the first operation target; and execute control processing that includes outputting the first operation target detected by the detection processing and the second operation target selected by the selection processing to the display screen in an arrayed manner.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

ADVANTAGEOUS EFFECTS OF INVENTION

The embodiments discussed herein afford the advantage that an operation target related to a specific operation target may be easily selected.

BRIEF DESCRIPTION OF DRAWINGS

FIG. 1 is a schematic block diagram of an information processing system according to a first embodiment;
FIG. 2 is a diagram illustrating an example configuration of a display screen displayed to a user;
FIG. 3 is a diagram illustrating an example in which a hidden operation target is displayed;
FIG. 4 is a diagram illustrating an example of an operation of selecting operation target in a prescribed region;
FIG. 5 is a diagram illustrating an example of an operation of selecting operation targets in a prescribed region;
FIG. 6 is a diagram illustrating an example of a prescribed operation;
FIG. 7 is a diagram illustrating an example of a prescribed operation;
FIG. 8 is an explanatory diagram for explaining overlapping regions;
FIG. 9 is an explanatory diagram for explaining attributes assigned to operation targets;
FIG. 10 is an explanatory diagram for explaining an attribute correspondence relationship;
FIG. 11 is an explanatory diagram for explaining an operation target selected in accordance with an attribute correspondence relationship;
FIG. 12 is a diagram illustrating an example of an arrayed display of selected operation targets;
FIG. 13 is a diagram illustrating an example of an operation target selected from an arrayed display;
FIG. 14 is a block diagram illustrating a schematic configuration of a computer that functions as a display apparatus according to the first embodiment;
FIG. 15 is a block diagram illustrating a schematic configuration of a computer that functions as an information processing apparatus according to the first embodiment;
FIG. 16 is a flowchart illustrating an example of information processing in the first embodiment;
FIG. 17 is an explanatory diagram for explaining a third operation target according to a second embodiment;
FIG. 18 is a flowchart illustrating an example of information processing in the second embodiment; and
FIG. 19 is an explanatory diagram for explaining an example of a first operation.

DESCRIPTION OF EMBODIMENTS

Hereafter, examples of embodiments will be described in detail while referring to the drawings.

<First Embodiment

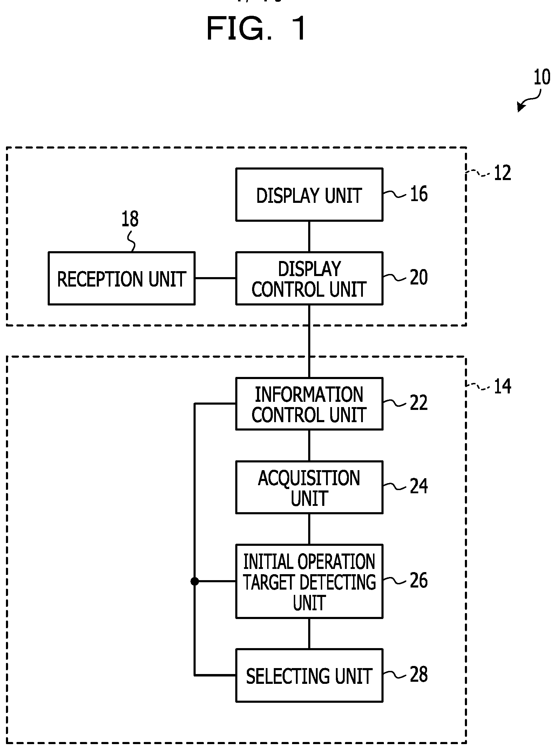

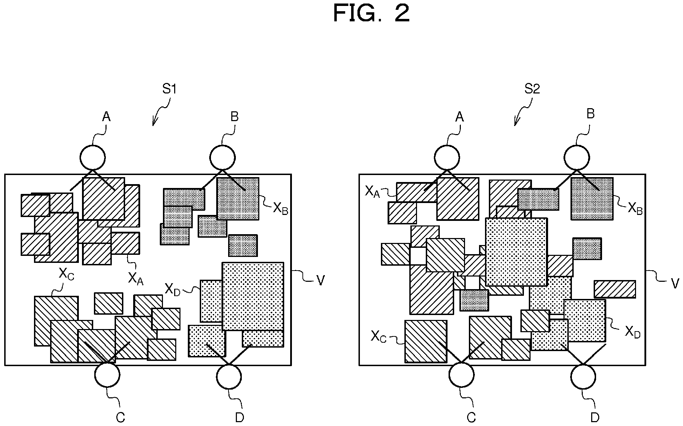

An information processing system 10 illustrated in FIG. 1 includes a display apparatus 12 and an information processing apparatus 14.
The display apparatus 12 includes a display unit 16, a reception unit 18, and a display control unit 20.
The display unit 16 displays a display screen in accordance with control performed by the display control unit 20, which is described later. The display unit 16 is implemented using a display, for example. A plurality of operation targets are displayed on the display screen of the display unit 16.
The reception unit 18 receives operation information input from a user. For example, the reception unit 18 receives operation information from the user input from a touch panel that is superposed with the display unit 16. The operation information includes information that indicates what touch operation was performed by the user.
The display control unit 20 controls the display unit 16 so as to display operation targets. "Operation target", for example, refers to a document or figure created using a prescribed application. In addition, the display control unit 20 controls the display unit 16 such that operation targets are displayed in accordance with operation information received by the reception unit 18. For example, the display control unit 20 changes the display position, display size, orientation, and so forth of the operation targets in accordance with the operation information. Furthermore, the display control unit 20 successively outputs operation information received by the reception unit 18 to the information processing apparatus 14.
As illustrated in FIG. 2, a case in which a display screen V displayed by the display unit 16 of the display apparatus 12 is displayed for a plurality of users will be described as an example. In the example in FIG. 2, the display screen V is displayed for a user A, a user B, a user C, and a user D. For example, a scene S1 in which the users work independently from each other and a scene S2 in which the users work as a group in the situation illustrated in FIG. 2 will be considered.
In the scene S1 illustrated in FIG. 2, the user A performs work using operation targets XA, the user B performs work using operation targets XB, the user C performs work using operation targets XC, and the user D performs work using operation targets XD. In the scene S1, the operation targets used in the work of the individual users are displayed in the surrounding areas of the respective users. In addition, in the scene S2, since the users are handling the work as a group, the operation targets XA, the operation targets XB, the operation targets XC, and the operation targets XD are mixed together.

In the situation illustrated in FIG. 2, a plurality of operation targets are displayed on the display screen V, and therefore it may be difficult for a user to select a specific operation target when a user attempts to select a specific operation target. For example, a case where a specific operation target is hidden due to the presence of another operation target may be considered. In addition, a case where a specific operation target is displayed at a position that a user is unable to reach and operate may be considered.

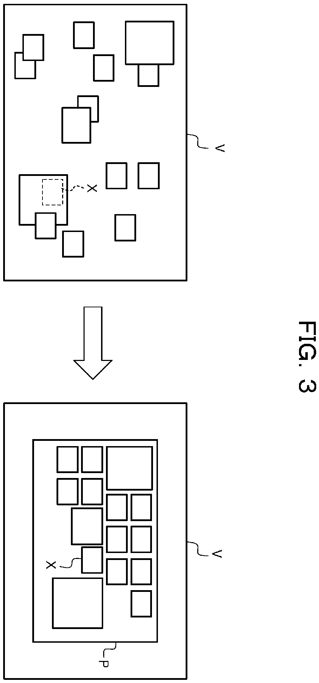

Regarding this, for example, as illustrated in FIG. 3, a case may be considered in which control is performed such that all the operation targets arranged on the display screen are displayed in an arrayed manner. As a result, a specific operation target X hidden due to presence of another operation target may be displayed. However, a large number of operation targets that are different from the specific operation target are arrayed and it is difficult to search for the specific operation target X. In addition, for example, an operation target on which operations are being performed by a user other than the specific user who instructed alignment of the operation targets, operation targets that are not desired, and so on are undesirably arrayed.

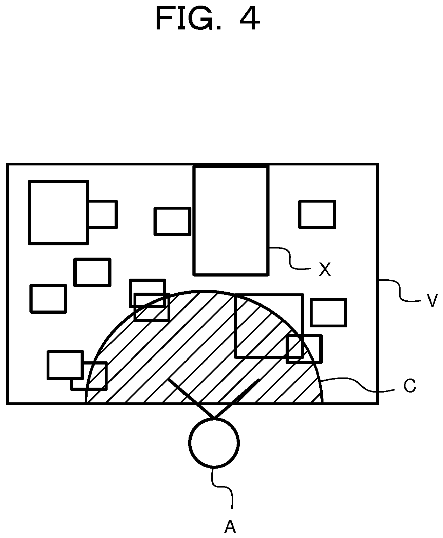

In addition, a case may be considered in which the user A directly selects a plurality of operation targets in the situation illustrated in FIG. 4. In this case, although the user A is able to select operation targets that are close to the user A such as those included in a semicircular region C in FIG. 4, the user A is not able to select operation targets displayed in a region that the user A is not able to reach with his or her hands.

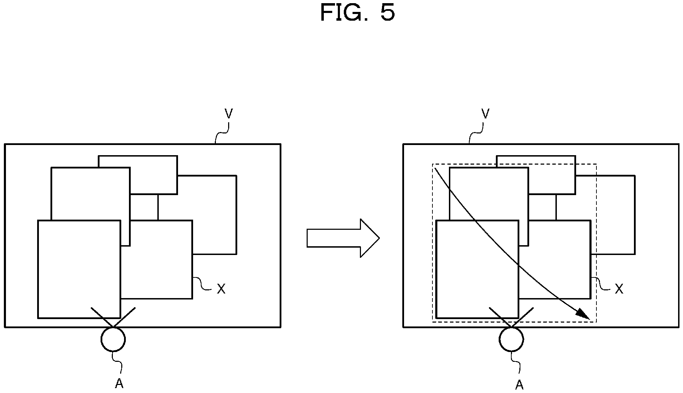

In addition, for example, as illustrated in FIG. 5, in the case where a rectangular region is calculated based on a stroke and a plurality of operation targets included in the calculated rectangular region are selected, the user A may draw a stroke from one end to another end of operation targets that he or she wishes to select and a long stroke may be drawn when making a selection. Consequently, it takes some time to select a plurality of operation targets.

Accordingly, in this embodiment, first, an operation, which is distinguishable from a normal operation, performed on an operation target displayed on the display screen is detected as a first operation. Then, the operation target corresponding to the first operation is designated as a first operation target. Then, second operation targets are selected from among the operation targets arranged on the display screen based on relationships between the first operation target and the other operation targets. After that, the first operation target and the second operation targets are displayed in an arrayed manner.

Hereafter, the information processing apparatus 14 that controls the display apparatus 12 will be specifically described.

As illustrated in FIG. 1, the information processing apparatus 14 includes an information control unit 22, an acquisition unit 24, an initial operation target detecting unit 26, and a selecting unit 28. The initial operation target detecting unit 26 is an example of a detecting unit of an embodiment. The information control unit 22 is an example of a control unit of an embodiment.

The information control unit 22 successively acquires user operation information output from the display apparatus 12. In addition, the information control unit 22 transmits a control signal to the display apparatus 12 in accordance with a selection result obtained by the selecting unit 28, which is described later.

The acquisition unit 24 acquires the user operation information acquired by the information control unit 22.

The initial operation target detecting unit 26 detects a first operation target specified by a prescribed operation performed with respect to a plurality of operation targets arranged on the display screen based on the user operation information acquired by the acquisition unit 24. Specifically, first, the initial operation target detecting unit 26 detects a first operation, which is an example of a prescribed operation. The first operation, which is an example of a prescribed operation, is an operation that may be distinguished from a normal operation and is set in advance. Then, the initial operation target detecting unit 26 detects the first operation target specified by the first operation.

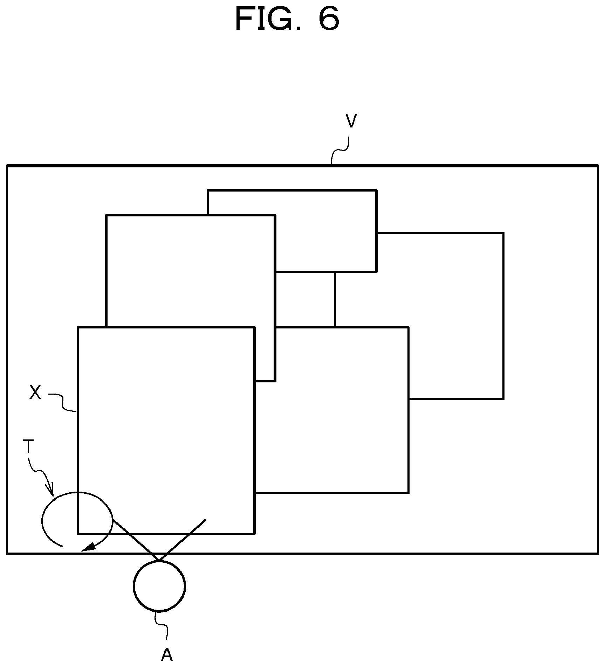

For example, as illustrated in FIG. 6, the initial operation target detecting unit 26 detects, as a first operation T, a stroke operation performed such that a touch operation of the user A enters an operation target from the outside and then exits the operation target to the outside as an operation that may be discriminated from a normal operation. Then, the initial operation target detecting unit 26 detects a first operation target X that corresponds to a first operation T.

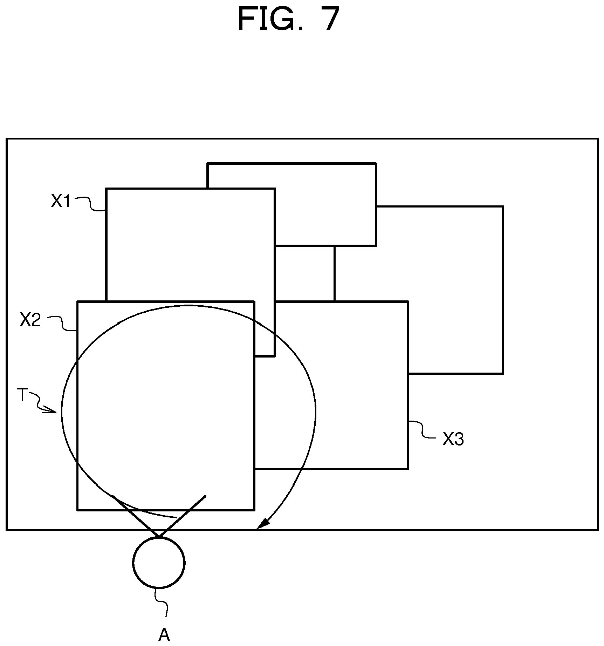

Furthermore, as illustrated in FIG. 7, the initial operation target detecting unit 26 detects a stroke operation that enters an operation target from the outside passes through a plurality of operation targets, and then exits an operation target to the outside as a first operation T. In this way, a plurality of operation targets are specified as first operation targets. In this case, the initial operation target detecting unit 26 detects first operation targets X1, X2, and X3 that correspond to the first operation T.

The selecting unit 28 selects a second operation target from among operation targets, which are different from the first operation target, that are arranged on the display screen of the display unit 16 of the display apparatus 12 based on the relationships between the first operation target detected by the initial operation target detecting unit 26 and the other operation targets.

Specifically, the selecting unit 28 selects the second operation target based on the display relationships between the first operation target and the other operation targets and an attribute assigned to the first operation target.

First, the selecting unit 28 selects second operation target candidates based on overlapping ratios with respect to the region where the first operation target is displayed as a display relationships with respect to the first operation target.

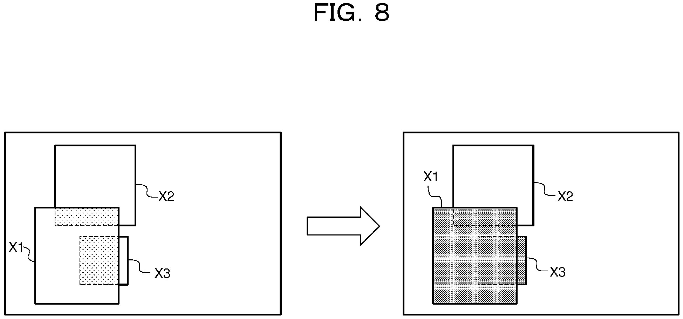

For example, as illustrated in FIG. 8, in the case where the operation target X1 has been selected as the first operation target, the selecting unit 28 sets the operation target X2 and the operation target X3, which each have a region that overlaps a region of the operation target X1, as second operation target candidates. Then, the selecting unit 28 calculates an overlapping ratio between the region of the operation target X1 and the region of the operation target X2. In addition, the selecting unit 28 calculates an overlapping ratio between the region of the operation target X1 and the region of the operation target X3. The overlapping ratio is an parameter that indicates how difficult it is to see (how difficult it is to operate) each operation target due to the arrangement relationship with respect to the first operation target, and the overlapping ratio is calculated based on Formula (1) given below, for example.

$$\text{Overlapping ratio} = \text{area of region that overlaps first operation target/area of entire region of operation target having region that overlaps region of first operation target}$$

$$(1)$$

Then, the selecting unit 28 selects an operation target for which the overlapping ratio is larger than a threshold as a second operation target candidate based on the calculated overlapping ratios and a threshold. In the example illustrated in FIG. 8, the overlapping ratio between the region of the operation target X1 and the region of the operation target X2 is less than or equal to the threshold, and therefore the operation target X2 is not selected as a second operation target candidate. On the other hand, the overlapping ratio between the region of the operation target X1 and the region of the operation target X3 is larger than the threshold, and therefore the operation target X3 is selected as a second operation target candidate. In addition, for example, in the case where a plurality of first operation targets have been detected, an overlapping ratio is calculated in accordance with the sum of the areas of regions that overlap the plurality of first operation targets.

Next, the selecting unit 28 selects a second operation target candidate that has attributes corresponding to attributes assigned to the first operation target as a second operation target.

In the case where a plurality of first operation targets have been detected by the initial operation target detecting unit 26, the selecting unit 28 calculates a set union of the attributes of the plurality of first operation targets. Then, the selecting unit 28 selects a second operation target candidate that has attributes corresponding to the attributes included in the set union as a second operation target.

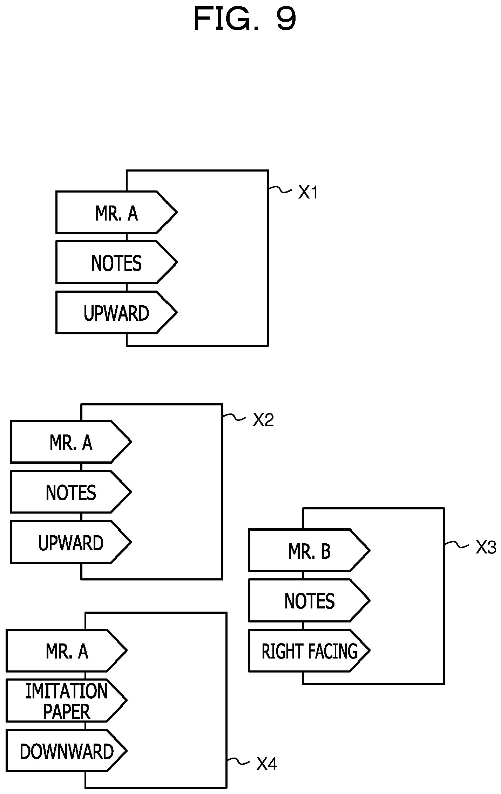

In this embodiment, for example, attributes such as those illustrated in FIG. 9 are assigned to each operation target. In the example illustrated in FIG. 9, the creator of the operation target, an application used to create the operation target, and the orientation of the operation target are assigned to each operation target as attributes. In addition, although attributes such as "Mr. A" in the figures are displayed in association with the operation targets for the sake of explanation, in reality, these attributes do not have to be displayed by the display unit 16.

For example, regarding the operation target X1, an attribute "Mr. A" is assigned as the creator of the operation target, an attribute "notes" is assigned as the application used to create the operation target, and an attribute "upward" is assigned as the orientation of the operation target.

Regarding the orientations of the operation targets, for example, attributes of "upward", "downward", "right facing", and "left facing" are assigned in accordance with a coordinate system used on the display screen.

In the case where the operation target X1 illustrated in FIG. 9 has been detected as the first operation target, the selecting unit 28 sets "Mr. A" && "notes" && "upward" as search attributes. Then, the selecting unit 28 selects a second operation target candidate having attributes that match the search attributes as a second operation target.

In addition, for example, in the case where the operation targets X2, X3, and X4 illustrated in FIG. 9 have been detected as first operation targets, the selecting unit 28 sets ("Mr. A" || "Mr. B") && ("notes" || "imitation paper") && ("upward" || "downward" || "right facing") as search attributes. Then, the selecting unit 28 selects a second operation target candidate having attributes that match the search attributes as a second operation target. Here, "&&" represents an AND condition and "||" represents an OR condition.

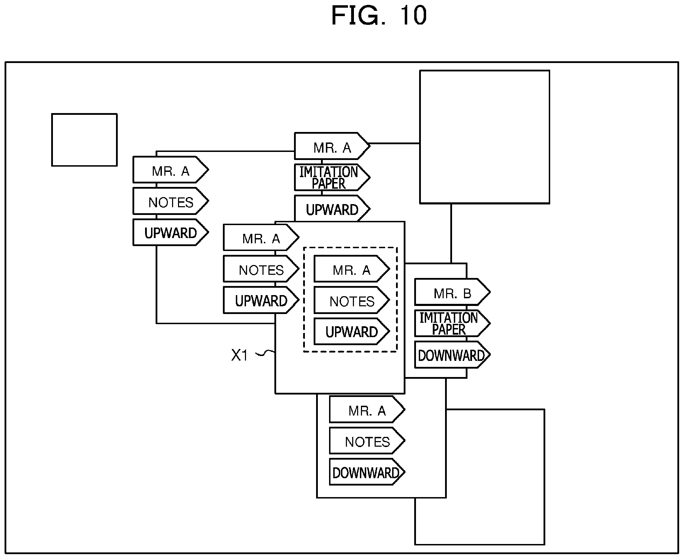

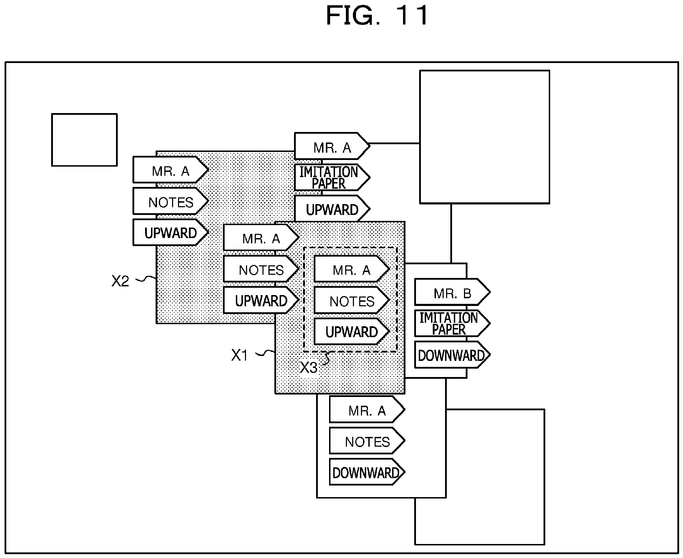

For example, as illustrated in FIG. 10, in the case where the operation target X1 has been detected as a first operation target, the selecting unit 28 sets "Mr. A" && "notes" && "upward" as the search attributes. Then, as illustrated in FIG. 11, the selecting unit 28 selects the operation target X2 and the operation target X3, which have attributes that match the search attributes, as second operation targets. The dotted line in FIG. 11 indicates an operation target that is hidden.

The information control unit 22 acquires the first operation target detected by the initial operation target detecting unit 26. In addition, the information control unit 22 acquires second operation targets selected by the selecting unit 28. Then, the information control unit 22 generates a control signal to perform control so as to display the first operation target and the second operation target in an arrayed manner on the display screen of the display unit 16 of the display apparatus 12 and outputs the control signal to the display apparatus 12.

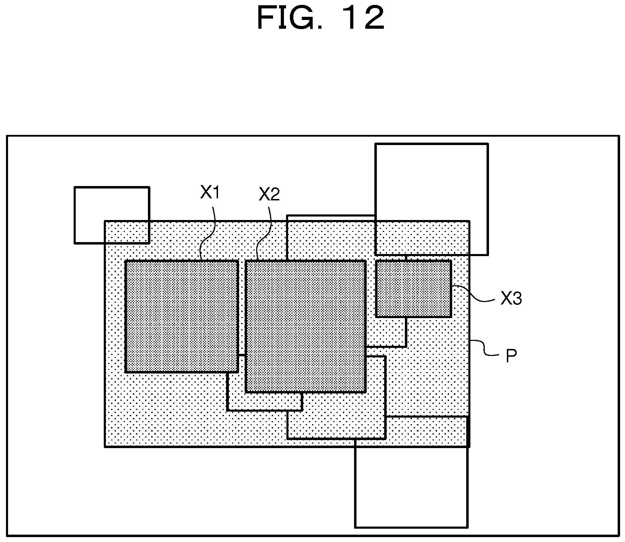

The display control unit 20 of the display apparatus 12 acquires the control signal output from the information processing apparatus 14 and controls the display unit 16 such that a display screen according to the control signal is displayed. Control is performed in accordance with the control signal generated by the information control unit 22, and as a result for example a selection display screen P is displayed on the display unit 16 as illustrated in FIG. 12. FIG. 12 is an example in which the selection display screen P is displayed so as to be superimposed on the display screen. For example, the operation target X1 is the first operation target and the operation target X2 and the operation target X3 are the second operation targets, the operation targets being displayed in an arrayed manner on the selection display screen P.

Once the first operation target and the second operation targets are displayed in an arrayed manner on the display screen of the display unit 16 through the control performed by the display control unit 20, the user selects a prescribed operation target that he or she wishes to look at from among the operation targets displayed in an arrayed manner by performing a touch operation. The reception unit 18 of the display apparatus 12 receives operation information input by the user. Then, the display control unit 20 controls the display unit 16 such that the selected operation target is displayed. The display control unit 20 then finishes array display and displays the first operation target and the second operation targets at their original positions.

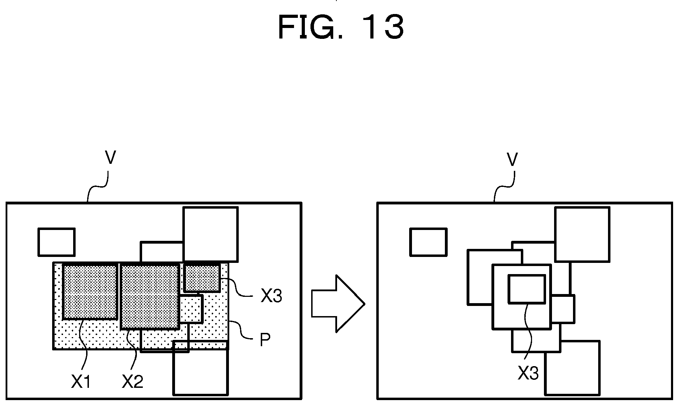

For example, as illustrated in FIG. 13, when the user selects the operation target X3 by performing a touch operation in the case where the operation target X1, the operation target X2, and the operation target X3 are included in the selection display screen P, the operation target X3 is displayed uppermost.

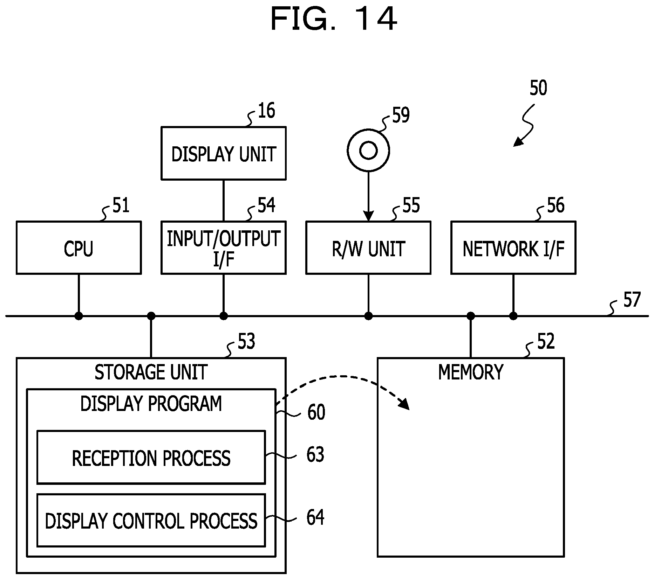

The display apparatus 12 may be implemented using a computer 50 illustrated in FIG. 14, for example. The computer 50 includes a CPU 51, a memory 52 serving as a temporary storage area, and a non-volatile storage unit 53. In addition, the computer 50 includes an input/output interface (I/F) 54 that is connected to the information processing apparatus 14, the display unit 16, and input/output devices such an input device (not illustrated), and includes a read/write (R/W) unit 55 that controls reading and writing of data from and to a recording medium 59. Furthermore, the computer 50 includes an network I/F 56 that is connected to a network such as the Internet. The CPU 51, the memory 52, the storage unit 53, the input/output I/F 54, the R/W unit 55, and the network I/F 56 are connected to one another via a bus 57.

The storage unit 53 may be implemented using a hard disk drive (HDD), a solid state drive (SSD), or a flash memory, for example. A display program 60, which is for causing the computer 50 to function as the display apparatus 12, is stored in the storage unit 53 serving as a storage medium. The display program 60 includes a display process 62, a reception process 63, and a display control process 64.

The CPU 51 reads the display program 60 from the storage unit 53, expands the display program 60 in the memory 52, and sequentially executes the processes of the display program 60. The CPU 51 operates as the reception unit 18 illustrated in FIG. 1 by executing the reception process 63. In addition, the CPU 51 operates as the display control unit 20 illustrated in FIG. 1 by executing the display control process 64. Thus, the computer 50, which executes the display program 60, functions as the display apparatus 12. Therefore, a processor that executes the display program 60, which is software, is hardware.

The functions implemented by the display program 60 may also be implemented using a semiconductor integrated circuit, more specifically, an application specific integrated circuit (ASIC), for example.

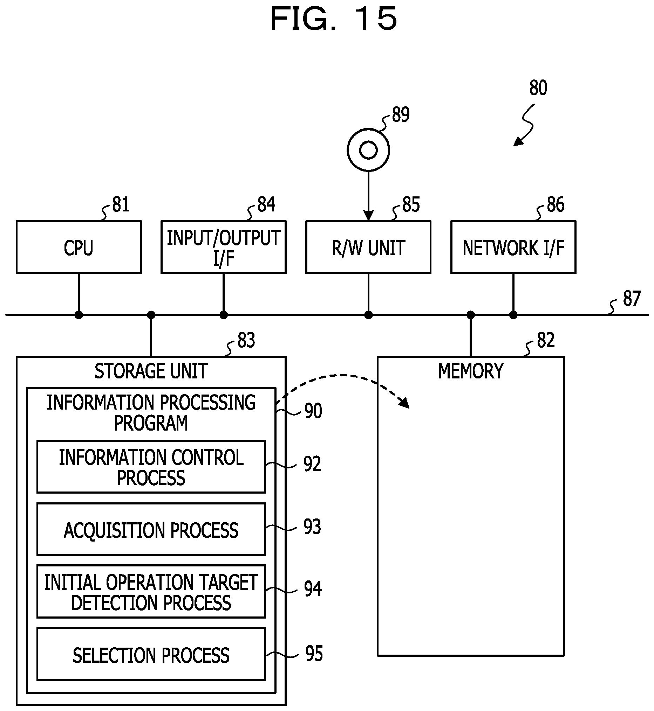

In addition, the information processing apparatus 14 may be implemented using a computer 80 illustrated in FIG. 15, for example. The computer 80 includes a CPU 81, a memory 82 serving as a temporary storage area, and a non-volatile storage unit 83. Furthermore, the computer 80 includes an input/output I/F 84, to which the display apparatus 12 and input/output devices (not illustrated) such as an input device are connected, and an R/W unit 85 that controls reading and writing of data from and to a recording medium 89. In addition, the computer 80 includes an network I/F 86 that is connected to a network such as the Internet. The CPU 81, the memory 82, the storage unit 83, the input/output I/F 84, the R/W unit 85, and the network I/F 86 are connected to one another via a bus 87. The display apparatus 12 and the information processing apparatus 14 may be connected to each other via the network I/F's 56 and 86.

The storage unit 83 may be implemented using an HDD, an SSD, a flash memory or the like. An information processing program 90, which is for causing the computer 80 to function as the information processing apparatus 14, is stored in the storage unit 83 serving as a storage medium. The information processing program 90 includes an information control process 92, an acquisition process 93, an initial operation target detection process 94, and a selection process 95.

The CPU 81 reads the information processing program 90 from the storage unit 83, expands the information processing program 90 in the memory 82, and sequentially executes the processes of the information processing program 90. In addition, the CPU 81 operates as the information control unit 22 illustrated in FIG. 1 by executing the information control process 92. In addition, the CPU 81 operates as the acquisition unit 24 illustrated in FIG. 1 by executing the acquisition process 93. Furthermore, the CPU 81 operates as the initial operation target detecting unit 26 illustrated in FIG. 1 by executing the initial operation target detection process 94. In addition, the CPU 81 operates as the selecting unit 28 illustrated in FIG. 1 by executing the selection process 95. Thus, the computer 80, which executes the information processing program 90, functions as the information processing apparatus 14. Therefore, a processor that executes the information processing program 90, which is software, is hardware.

The functions implemented by the information processing program 90 may also be implemented by a semiconductor integrated circuit, more specifically, an ASIC, for example.

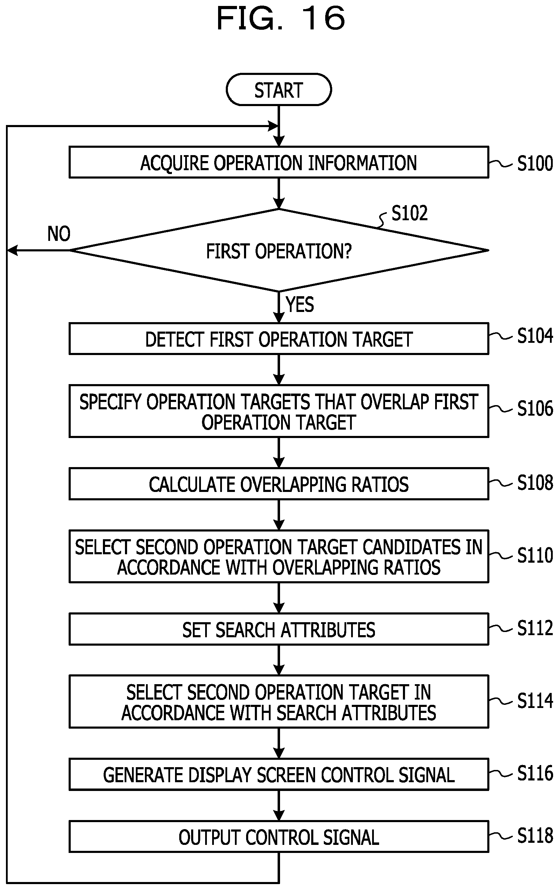

Next, operation of the information processing system 10 according to this embodiment will be described. The display unit 16 of the display apparatus 12 displays a display screen in accordance with control performed by the display control unit 20. The reception unit 18 of the display apparatus 12 receives operation information input by a user. The display control unit 20 successively outputs operation information received by the reception unit 18 to the information processing apparatus 14. Then, the information control unit 22 of the information processing apparatus 14 successively acquires operation information output from the display apparatus 12 and outputs the operation information to the acquisition unit 24. The information processing apparatus 14 then executes the information processing illustrated in FIG. 16. Hereafter, the processing steps will be described in detail.

In step S100, the acquisition unit 24 acquires user operation information output by the information control unit 22.

In step S102, the initial operation target detecting unit 26 determines whether the operation is a first operation based on the user operation information acquired in step S100. In the case where the operation information indicates a first operation, the processing advances to step S104. On the other hand, in the case where the operation information does not indicate a first operation, the processing returns to step S100.

In step S104, the initial operation target detecting unit 26 detects a first operation target corresponding to a first operation.

In step S106, the selecting unit 28 specifies operation that have a region that overlaps a region of the first operation target detected in step S104.

In step S108, the selecting unit 28 calculates an overlapping ratio between a region of the first operation target detected in step S104 and a region of each operation target specified in step S106 in accordance with the above-mentioned Formula (1).

In step S110, the selecting unit 28 selects an operation target for which the overlapping ratio is greater than a threshold as a second operation target candidate from among the operation targets specified in step S106 based on the overlapping ratios calculated in step S108 and a threshold.

In step S112, the selecting unit 28 sets the attributes of the first operation target detected in step S104 as search attributes.

In step S114, the selecting unit 28 selects second operation target candidates having attributes that match the search attributes set in step S112 as second operation targets.

In step S116, the information control unit 22 acquires the first operation target detected in step S104. In addition, the information control unit 22 acquires the second operation targets selected in step S114. Then, the information control unit 22 generates a control signal for performing control so as to display the first operation target and the second operation targets in an arrayed manner on the display screen of the display unit 16 of the display apparatus 12.

In step S118, the information control unit 22 outputs the control signal generated in step S116 to the display apparatus 12.

The display control unit 20 of the display apparatus 12 acquires the control signal output from the information processing apparatus 14 and controls the display unit 16 such that a selection display screen according to the control signal is displayed. Once the first operation target and the second operation targets are displayed on the selection display screen of the display unit 16 through the control performed by the display control unit 20, the user selects a prescribed operation target that he or she wishes to look at by performing a touch operation.

As described above, the information processing apparatus according to this embodiment, detects a first operation target specified by a prescribed operation performed with respect to a plurality of operation targets arranged on the display screen. Then, the information processing apparatus selects second operation targets from among operation targets that are different from the first operation target and are arranged on the display screen based on relationships between the detected first operation target and the other operation targets. Then, the information processing apparatus performs control such that the first operation target and the second operation targets are displayed in an arrayed manner. Thus, operation targets having a relationship with a specific operation target may be easily selected. Furthermore, operability with respect to the operation targets may be improved.

In addition, with the information processing apparatus according to this embodiment, even in the case where a plurality of operation targets are displayed on the display screen, the user is able to easily search for a specific operation target due to second operation targets having attributes corresponding to the attributes assigned to the first operation target being displayed in an arrayed manner.

<Second Embodiment

Next, a second embodiment will be described. The configuration of an information processing system according to the second embodiment is the same as the configuration of the first embodiment and therefore the same reference symbols are used and description thereof is omitted.

The second embodiment differs from the first embodiment in that third operation targets are selected based on overlapping ratios between a region in which a first operation target is displayed and regions in which second operation targets are displayed.

The selecting unit 28 of the second embodiment selects a third operation target that is different from a first operation target and a second operation target based on an overlapping ratio with respect to a region obtained by combining a region in which the first operation target is displayed and a region in which the second operation target is displayed.

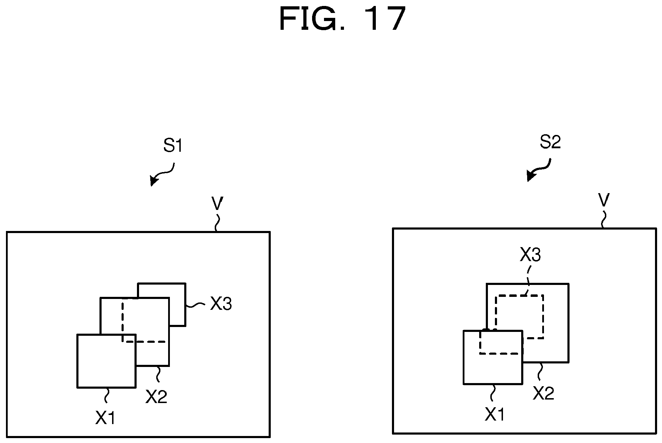

As illustrated in FIG. 17, in the case where a first operation target X1 has been specified in the display screen V in scene S1, a second operation target X2 that has an overlapping region that overlaps the first operation target X1 and exceeds a threshold is specified. In this case, the operation target X3 does not have a region that overlaps the first operation target X1, and therefore the operation target X3 is not selected as a second operation target. However, the user may also want the operation target X3 to be displayed.

In addition, as illustrated in FIG. 17, in the case where a first operation target X1 has been specified in the display screen V in scene S2, an operation target X2 has an overlapping region that overlaps the first operation target X1 and exceeds a threshold, and therefore is specified as a second operation target. In contrast, the operation target X3 has an overlapping region that overlaps the first operation target X1 and is less than or equal to the threshold, and therefore is not specified as a second operation target. However, the operation target X3 is hidden due to being overlapped by the second operation target X2 and the user may also want the operation target X3 to be displayed.

Accordingly, the selecting unit 28 of the second embodiment selects a third operation target that is different from the first operation target and the second operation target based on an overlapping ratio with respect to the region in which the first operation target is displayed and the region in which the second operation target is displayed.

Specifically, after selecting the second operation target, the selecting unit 28 selects a third operation target candidate based on an overlapping ratio with respect to the region in which the first operation target is displayed and the region in which the second operation target is displayed (for example, see Formula (2) below). In below Formula (2), the area of a region where a region of the first operation target and a region of the second operation target overlap is subtracted from the sum of the area of a region that overlaps a region of the first operation target and the area of a region that overlaps a region of the second operation target. This is to avoid duplicating calculation of the area of a region where a region of the first operation target and a region of the second operation target overlap over the entire region of the operation target.

$$\text{Overlapping ratio} = (a + b - c)/\text{area of entire region of operation}$$
$$\text{target having overlapping regions (2)}$$

　　a: area of region overlapping region of first operation target
　　b: area of region overlapping region of second operation target
　　c: area of region where region of first operation target and region of second operation target overlap in entire region of operation target

Then, the selecting unit 28 selects operation targets for which the overlapping ratio is larger than a threshold as third operation target candidates based on the calculated overlapping ratio and a threshold.

Next, the selecting unit 28 selects a third operation target candidate that has attributes corresponding to attributes assigned to the first operation target as a third operation target.

Then, the selecting unit 28 performs control to display the first operation target and the second operation target and the third operation target selected by the selecting unit 28 in an arrayed manner on the display screen.

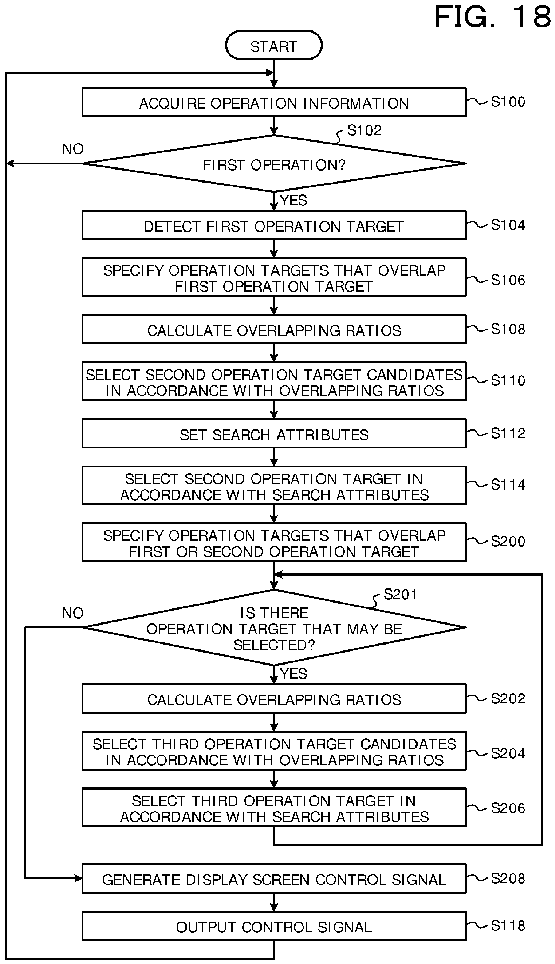

Next, operation of the information processing system 10 according to the second embodiment will be described. The display unit 16 of the display apparatus 12 displays a display screen in accordance with control performed by the display control unit 20. The reception unit 18 of the display apparatus 12 receives operation information input by a user. The display control unit 20 successively outputs operation information received by the reception unit 18 to the information processing apparatus 14. Then, the information control unit 22 of the information processing apparatus 14 successively acquires operation information output from the display apparatus 12 and outputs the operation information to the acquisition unit 24. The information processing apparatus 14 then executes the information processing illustrated in FIG. 18. Hereafter, the processing steps will be described in detail.

Steps S100 to S114 are executed similarly to as in the first embodiment.

In step S200, the selecting unit 28 specifies operation targets having a region that overlaps a region of the first operation target detected in step S104 or a region of the second operation target selected in step S114.

In step S201, the selecting unit 28 determines whether there is an operation target that may be selected as a third operation target based on the specification result obtained in step S200. In the case where there is an operation target that may be selected, the processing advances to step S202. On the other hand, in the case where there is no operation target that may be selected as a third operation target, the processing moves to step S208. "An operation target that may be selected as a third operation target" refers to an operation target having a region that overlaps a region of the first operation target detected in step S104 or a region of the second operation target selected in step S114.

In step S202, the selecting unit 28 calculates an overlapping ratio between a region of the first operation target or a region of the second operation target and a region of the operation target specified in step S200 in accordance with the above-mentioned Formula (2).

In step S204, the selecting unit 28 selects operation targets for which the overlapping ratio is greater than a threshold as third operation target candidates from among the operation targets specified in step S200 based on the overlapping ratios calculated in step S202 and a threshold.

In step S206, the selecting unit 28 selects a third operation target candidate having attributes that match the search attributes set in step S112 as a third operation target. After that, step S202, step S204, and step S206 are repeated until there are no operation targets that may be selected as a third operation target.

In step S208, the information control unit 22 acquires the first operation target detected in step S104. In addition, the information control unit 22 acquires the second operation targets selected in step S114. In addition, the information control unit 22 acquires the third operation targets selected in step S206. Then, the information control unit 22 generates a control signal to perform control so as to display the first operation target, the second operation targets, and the third operation targets in an arrayed manner on the display screen of the display unit 16 of the display apparatus 12.

In step S118, the information control unit 22 outputs the control signal generated in step S116 to the display apparatus 12.

As described above, the information processing apparatus according to the second embodiment selects a third operation target that is different from the first operation target and the second operation target based on an overlapping ratio with respect to a region in which the second operation target is displayed. Then, the information processing apparatus performs control so as to display the first operation target, the second operation target, and the third operation target in an arrayed manner. Thus, operation targets may be displayed in an arrayed manner even when an operation target is hidden by a second operation target.

In the above description, embodiments have been described in which a display program and an information processing program are stored (installed) in advance in a storage units, but the embodiments are not limited to this configuration. A program according to an embodiment may be supplied by being recorded on a recording medium such as a CD-ROM, a DVD-ROM, or a USB memory.

All literature, patent applications, and technical standards mentioned in the present specification are incorporated by reference in the present specification to the same degree as in a case where incorporation of individual literature, patent applications, and technical specifications by reference is specifically or individually described.

Next, modifications of the above-described embodiments will be described.

In the above-described embodiments, an example of an overlapping ratio with respect to a region where the first operation target is displayed is described as an example of a relationship with the first operation target as seen by a user, and an example is described in which the orientation of an operation target is assigned as an attribute, but the embodiments are not limited to these examples. For example, regarding the orientations of operation targets, the orientations of operation targets may be successively detected in accordance with the coordinate system of the display screen and a second operation target displayed with an orientation corresponding to the orientation with which a first operation target is displayed may be selected based on the detected orientations of the operation targets.

Furthermore, in the above-described embodiments, an example is described in which a second operation target is selected in accordance with an overlapping ratio with respect to a region where a first operation target is displayed and an attribute corresponding to an attribute assigned to the first operation target, but the embodiment are not limited to this example. For example, a second operation target may be selected in accordance with either one of an overlapping ratio with respect to the region where the first operation target is displayed and an attribute corresponding to the attribute assigned to the first operation target. In addition, an operation target selected in accordance with an overlapping ratio and an operation target selected in accordance with an attribute may be both selected as second operation targets. Furthermore, in the case where only an operation target selected in accordance with an attribute is selected as a second operation target, for example, operation targets that do not overlap the first operation target but are arranged at distant positions that may not be reached may also be selected as second operation targets.

In addition, in the second embodiment, an example is described in which a third operation target is selected based on an overlapping ratio with respect to a region in which a first operation target is displayed and a region in which a second operation target is displayed, but the embodiments are not limited to this example. For example, a third operation target may be selected based on only an overlapping ratio with respect to a region where a second operation target is displayed.

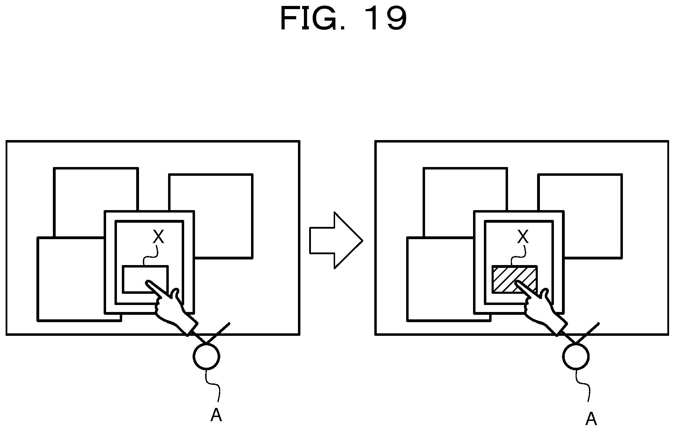

In the above-described embodiments, although an example is described in which a stroke operation, in which a touch operation of the user A enters an operation target from the outside and then exits the operation target to the outside, is detected as a first operation, which is an example of a prescribed operation, the embodiments are not limited to this example. For example, as illustrated in FIG. 19, an operation in which the user A continually touches an operation target X for a prescribed period of time may be detected as a first operation.

All examples and conditional language recited herein of the RFID tag and the high frequency circuit are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

Reference Signs List

10 information processing system

12 display apparatus

14 information processing apparatus

16 display unit

18 reception unit

20 display control unit

22 information control unit

24 acquisition unit

26 initial operation target detecting unit

28 selecting unit

50, 80 computer

51, 81 CPU

59, 89 storage unit

53, 83 recording medium

60 display program

90 information processing program

A, B, C, D user

T operation

V display screen

X, X1, X2, X3, XA, XB, XC, XD operation target

Citation List

Japanese Laid-open Patent Publication No. 2016-115231
Japanese Laid-open Patent Publication No. 2014-178933

**Claims**

1.  An apparatus for information processing, the apparatus comprising:

    a memory;
    a processor coupled to the memory and configured to:

    execute detection processing that includes detecting a first operation target specified by a given operation with respect to a plurality of operation targets arranged on a display screen;
    execute selection processing that includes selecting a second operation target from among the plurality of operation targets in accordance with relationships with respect to the first operation target detected by the detection processing, the second operation target being different from the first operation target; and
    execute control processing that includes outputting the first operation target detected by the detection processing and the second operation target selected by the selection processing to the display screen in an arrayed manner.

2.  The apparatus for information processing according to claim 1, wherein the selection processing selects the second operation target in accordance with a display relationship with respect to the first operation target.

3.  The apparatus for information processing according to claim 1 or claim 2, wherein the selection processing selects the second operation target in accordance with an overlapping ratio with respect to a region where the first operation target is displayed.

4.  The apparatus for information processing according to any of the preceding claims, wherein the selection processing further selects a third operation target that is different from the first operation target and the second operation target in accordance with an overlapping ratio with respect to a region where the second operation target is displayed, and the control processing performs control such that the first operation target, and the second operation target and the third operation target selected by the selection processing are displayed in an arrayed manner on the display screen.

5.  The apparatus for information processing according to claim 1 or claim 2, wherein the selection processing selects an operation target displayed in an orientation that corresponds to an orientation in which the first operation target is displayed as the second operation target.

6.  The apparatus for information processing according to claim 1, wherein the selection processing selects an operation target having an attribute that corresponds to an attribute assigned to the first operation target as the second operation target.

7.  The apparatus for information processing according to claim 6, wherein in a case where a plurality of the first operation targets are detected by the detection processing, the selection processing calculates a set union of the attributes of the plurality of first operation targets and selects an operation target having attributes corresponding to the attributes included in the set union as the second operation target.

8. A system for information processing, the system comprising:

a first apparatus including
a display circuit configured to display a display screen, and
a reception circuit configured to receive an operation performed with respect to a plurality of operation targets arranged on the display screen of the display processing;
a second apparatus including
a memory, and
a processor coupled to the memory and configured to

execute detection processing that includes detecting a first operation target specified by a prescribed operation with respect to a plurality of operation targets arranged on a display screen;
execute selection processing that includes selecting a second operation target from among the plurality of operation targets in accordance with relationships with respect to the first operation target detected by the detection processing, the second operation target being different from the first operation target; and
execute control processing that includes outputting the first operation target detected by the detection processing and the second operation target selected by the selection processing to the display screen in an arrayed manner.

9. The system according to claim 8, wherein the selection processing selects the second operation target in accordance with a display relationship with respect to the first operation target.

10. The system according to claim 8 or claim 9, wherein the selection processing selects the second operation target in accordance with an overlapping ratio with respect to a region where the first operation target is displayed.

11. The system according to any of claims 8 to 10, wherein the selection processing further selects a third operation target that is different from the first operation target and the second operation target in accordance with an overlapping ratio with respect to a region where the second operation target is displayed, and
the control processing performs control such that the first operation target, and the second operation target and the third operation target selected by the selection processing are displayed in an arrayed manner on the display screen.

12. The system according to claim 8 or claim 9, wherein the selection processing selects an operation target displayed in an orientation that corresponds to an orientation in which the first operation target is displayed as the second operation target.

13. The system according to claim 8, wherein the selection processing selects an operation target having an attribute that corresponds to an attribute assigned to the first operation target as the second operation target.

14. The system according to claim 13, wherein in a case where a plurality of the first operation targets are detected by the detection processing, the selection processing calculates a set union of the attributes of the plurality of first operation targets and selects an operation target having attributes corresponding to the attributes included in the set union as the second operation target.

15. An information processing method performed by a computer, the method comprising:

executing, by a processor of the computer, detection processing that includes detecting a first operation target specified by a given operation with respect to a plurality of operation targets arranged on a display screen;
executing, by the processor of the computer, selection processing that includes selecting a second operation target from among the plurality of operation targets in accordance with relationships with respect to the first operation target detected by the detection processing, the second operation target being different from the first operation target; and
executing, by the processor of the computer, control processing that includes outputting the first operation target detected by the detection processing and the second operation target selected by the selection processing to the display screen in an arrayed manner.

# FIG. 1

10

```
┌ ─ ─ ─ ─ ─ ─ ─ ─ ─ ─ ─ ─ ─ ─ ─ ─ ─ ─ ─ ─ ─ ┐
│                                             │ ⌐ ⌐ 12
│                    ┌──────────────┐         │
│                    │ DISPLAY UNIT │ ～16    │
│        18          └──────┬───────┘         │
│         ⌐                 │                 │
│  ┌──────────────┐  ┌──────┴───────┐         │
│  │RECEPTION UNIT├──┤   DISPLAY    │ ～20    │
│  └──────────────┘  │ CONTROL UNIT │         │
│                    └──────┬───────┘         │
└ ─ ─ ─ ─ ─ ─ ─ ─ ─ ─ ─ ─ ─│─ ─ ─ ─ ─ ─ ─ ─ ┘
┌ ─ ─ ─ ─ ─ ─ ─ ─ ─ ─ ─ ─ ─│─ ─ ─ ─ ─ ─ ─ ─ ┐
│                    ┌──────┴───────┐         │ ⌐ ⌐ 14
│              ┌─────┤ INFORMATION  │ ～22    │
│              │     │ CONTROL UNIT │         │
│              │     └──────┬───────┘         │
│              │     ┌──────┴───────┐         │
│              │     │ ACQUISITION  │ ～24    │
│              │     │     UNIT     │         │
│              │     └──────┬───────┘         │
│              │     ┌──────┴───────┐         │
│              │     │INITIAL OPER- │         │
│              ●─────┤ATION TARGET  │ ～26    │
│              │     │DETECTING UNIT│         │
│              │     └──────┬───────┘         │
│              │     ┌──────┴───────┐         │
│              └─────┤SELECTING UNIT│ ～28    │
│                    └──────────────┘         │
└ ─ ─ ─ ─ ─ ─ ─ ─ ─ ─ ─ ─ ─ ─ ─ ─ ─ ─ ─ ─ ─ ┘
```

FIG. 2

FIG. 3

# FIG. 4

# FIG. 5

# FIG. 6

# FIG. 7

FIG. 8

# FIG. 9

X1
MR. A
NOTES
UPWARD

X2
MR. A
NOTES
UPWARD

X3
MR. B
NOTES
RIGHT FACING

X4
MR. A
IMITATION PAPER
DOWNWARD

# FIG. 10

MR. A

MR. A
NOTES
UPWARD

MR. A
IMITATION PAPER
UPWARD

MR. A
NOTES
UPWARD

MR. A
NOTES
UPWARD

MR. B
IMITATION PAPER
DOWNWARD

X1

MR. A
NOTES
DOWNWARD

# FIG. 11

MR. A

MR. A

IMITATION PAPER

NOTES

UPWARD

UPWARD

X2

MR. A

NOTES

MR. A

UPWARD

NOTES

X1

UPWARD

X3

MR. B

IMITATION PAPER

DOWNWARD

MR. A

NOTES

DOWNWARD

# FIG. 12

# FIG. 13

# FIG. 14

DISPLAY UNIT 16

59

50

CPU 51

INPUT/OUTPUT I/F 54

R/W UNIT 55

NETWORK I/F 56

57

STORAGE UNIT 53

DISPLAY PROGRAM 60

RECEPTION PROCESS 63

DISPLAY CONTROL PROCESS 64

MEMORY 52

# FIG. 15

# FIG. 16

START

ACQUIRE OPERATION INFORMATION — S100

FIRST OPERATION? — S102

NO

YES

DETECT FIRST OPERATION TARGET — S104

SPECIFY OPERATION TARGETS THAT OVERLAP FIRST OPERATION TARGET — S106

CALCULATE OVERLAPPING RATIOS — S108

SELECT SECOND OPERATION TARGET CANDIDATES IN ACCORDANCE WITH OVERLAPPING RATIOS — S110

SET SEARCH ATTRIBUTES — S112

SELECT SECOND OPERATION TARGET IN ACCORDANCE WITH SEARCH ATTRIBUTES — S114

GENERATE DISPLAY SCREEN CONTROL SIGNAL — S116

OUTPUT CONTROL SIGNAL — S118

# FIG. 17

# FIG. 18

```
                    ( START )
                        │
                        ▼
          ┌─────────────────────────────┐
          │ ACQUIRE OPERATION INFORMATION │ ～S100
          └─────────────────────────────┘
                        │
                        ▼ S102
      NO      ◇───────────────────────◇
    ◄─────────    FIRST OPERATION?    
              ◇───────────────────────◇
                        │ YES
                        ▼
          ┌─────────────────────────────┐
          │ DETECT FIRST OPERATION TARGET │ ～S104
          └─────────────────────────────┘
                        │
                        ▼
          ┌─────────────────────────────────┐
          │ SPECIFY OPERATION TARGETS THAT OVERLAP │ ～S106
          │       FIRST OPERATION TARGET         │
          └─────────────────────────────────┘
                        │
                        ▼
          ┌─────────────────────────────┐
          │ CALCULATE OVERLAPPING RATIOS │ ～S108
          └─────────────────────────────┘
                        │
                        ▼
          ┌──────────────────────────────────────┐
          │ SELECT SECOND OPERATION TARGET CANDIDATES │ ～S110
          │ IN ACCORDANCE WITH OVERLAPPING RATIOS    │
          └──────────────────────────────────────┘
                        │
                        ▼
          ┌─────────────────────────────┐
          │     SET SEARCH ATTRIBUTES    │ ～S112
          └─────────────────────────────┘
                        │
                        ▼
          ┌─────────────────────────────────┐
          │ SELECT SECOND OPERATION TARGET IN │ ～S114
          │ ACCORDANCE WITH SEARCH ATTRIBUTES │
          └─────────────────────────────────┘
                        │
                        ▼
          ┌──────────────────────────────────────┐
          │ SPECIFY OPERATION TARGETS THAT OVERLAP   │ ～S200
          │  FIRST OR SECOND OPERATION TARGET        │
          └──────────────────────────────────────┘
                        │
                        ▼ S201
      NO      ◇───────────────────────◇
    ◄─────────      IS THERE          
              ◇ OPERATION TARGET THAT MAY BE ◇
              ◇       SELECTED?         ◇
                        │ YES
                        ▼
          ┌─────────────────────────────┐
          │ CALCULATE OVERLAPPING RATIOS │ ～S202
          └─────────────────────────────┘
                        │
                        ▼
          ┌──────────────────────────────────────┐
          │ SELECT THIRD OPERATION TARGET CANDIDATES │ ～S204
          │ IN ACCORDANCE WITH OVERLAPPING RATIOS    │
          └──────────────────────────────────────┘
                        │
                        ▼
          ┌─────────────────────────────────┐
          │ SELECT THIRD OPERATION TARGET IN  │ ～S206
          │ ACCORDANCE WITH SEARCH ATTRIBUTES │
          └─────────────────────────────────┘
                        │
                        ▼
          ┌──────────────────────────────────────┐
          │ GENERATE DISPLAY SCREEN CONTROL SIGNAL │ ～S208
          └──────────────────────────────────────┘
                        │
                        ▼
          ┌─────────────────────────────┐
          │     OUTPUT CONTROL SIGNAL    │ ～S118
          └─────────────────────────────┘
```

# FIG. 19

Europäisches
Patentamt

European
Patent Office

Office européen
des brevets

# EUROPEAN SEARCH REPORT

Application Number

EP 18 17 2020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/286581 A1 (HORIUCHI YOSHIO [JP] ET AL) 25 September 2014 (2014-09-25) * paragraphs [0018] - [0074] * ----- | 1-15 | INV. G06F3/0481 G06F3/0484 |
| A | WO 2014/093105 A1 (GOOGLE INC [US]) 19 June 2014 (2014-06-19) * paragraphs [0014] - [0058] * ----- | 1-15 | |

TECHNICAL FIELDS
SEARCHED      (IPC)

G06F

The present search report has been drawn up for all claims

| Place of search | Date of completion of the search | Examiner |
|---|---|---|
| The Hague | 2 October 2018 | Davenport, Kevin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 17 2020

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2018

| Patent document cited in search report | | Publication date | Patent family member(s) | | Publication date |
|---|---|---|---|---|---|
| US 2014286581 | A1 | 25-09-2014 | JP<br>JP<br>US | 6188370 B2<br>2014186573 A<br>2014286581 A1 | 30-08-2017<br>02-10-2014<br>25-09-2014 |
| WO 2014093105 | A1 | 19-06-2014 | AU<br>CA<br>CN<br>EP<br>KR<br>US<br>WO | 2013359894 A1<br>2892855 A1<br>104838349 A<br>2929421 A1<br>20150093708 A<br>2014164989 A1<br>2014093105 A1 | 04-06-2015<br>19-06-2014<br>12-08-2015<br>14-10-2015<br>18-08-2015<br>12-06-2014<br>19-06-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016115231 A
- JP 2014178933 A